(19) Europäisches Patentamt
European Patent Office
Office européen des brevets

(11) **EP 2 400 631 A1**

(12) **EUROPEAN PATENT APPLICATION**
published in accordance with Art. 153(4) EPC

(43) Date of publication:
**28.12.2011 Bulletin 2011/52**

(51) Int Cl.:
***H02J 17/00*** *(2006.01)*

(21) Application number: **09840385.0**

(22) Date of filing: **17.04.2009**

(86) International application number:
**PCT/JP2009/057733**

(87) International publication number:
**WO 2010/095281 (26.08.2010 Gazette 2010/34)**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **17.02.2009 JP 2009034301**

(71) Applicants:
• **Nippon Soken, Inc.**
**Shimohasumi-cho**
**Nishio-shi**
**Aichi 445-0012 (JP)**
• **Toyota Jidosha Kabushiki Kaisha**
**Toyota-shi, Aichi 471-8571 (JP)**

(72) Inventors:
• **INOUE, Takumi**
**Nishio-shi**
**Aichi 445-0012 (JP)**
• **SAKAKIBARA, Hiroyuki**
**Nishio-shi**
**Aichi 445-0012 (JP)**
• **ICHIKAWA, Shinji**
**Toyota-shi**
**Aichi 471-8571 (JP)**

(74) Representative: **Kuhnen & Wacker**
**Patent- und Rechtsanwaltsbüro**
**Prinz-Ludwig-Strasse 40A**
**85354 Freising (DE)**

(54) **CONTACTLESS POWER SOURCING EQUIPMENT AND CONTACTLESS POWER SOURCING SYSTEM**

(57) Electric power feeding equipment (1) and an electric power receiving device (2) include a primary self resonant coil (30) and a secondary self resonant coil (60), respectively, resonating through an electromagnetic field to allow the electric power feeding equipment (1) to feed the electric power receiving device (2) with electric power in a non-contact manner. A control device (40) sets a frequency range for a spread spectrum, as based on an S-parameter S21 of a circuit constituted of the primary coil (20) and primary self resonant coil (30) of the electric power feeding equipment (1) and the secondary self resonant coil (60) and secondary coil (70) of the electric power receiving device (2), and controls a high frequency electric power supply device (10) to supply the electric power receiving device (2) with high frequency electric power having the set frequency range.

FIG.1

**Description**

TECHNICAL FIELD

The present invention relates generally to non-contact electric power feeding equipment and non-contact electric power feeding systems, and particularly to non-contact electric power feeding equipment and non-contact electric power feeding systems having electric power feeding equipment and an electric power receiving device receiving electric power from the electric power feeding equipment, provided with resonators, respectively, caused to resonate through an electromagnetic field to feed the electric power receiving device with electric power in a non-contact manner.

BACKGROUND ART

Electric vehicles, hybrid vehicles and other electric motored vehicles are gaining large attention as ecologically friendly vehicles. These vehicles have mounted therein an electric motor generating force to drive and thus cause the vehicle to travel, and a rechargeable power storage device storing therein electric power supplied to the electric motor. Note that hybrid vehicles include a vehicle having mounted therein an electric motor and in addition an internal combustion engine together therewith as power sources, and a vehicle having mounted therein a power storage device and in addition a fuel cell together therewith as direct current power supplies for driving the vehicle.

A hybrid vehicle is also known that, as well as an electric vehicle, allows a power supply external to the vehicle to charge a power storage device mounted in the vehicle. For example, a plug-in hybrid vehicle is known. This vehicle allows the power storage device to be charged from a general household power supply through a charging cable connecting a receptacle of a power supply provided in premises and a charging port of the vehicle.

On the other hand, an electric power transfer method without using a power supply cord or an electric power transfer cable, i.e., wireless power transfer, is gaining attention in recent years. There are three wireless electric power transfer techniques known as being promising, which are power transfer through electromagnetic induction, power transfer by microwaves, and power transfer through resonance.

Of these three techniques, power transfer through resonance causes a pair of resonators (e.g., a pair of self resonant coils) to resonate in an electromagnetic field (a near field) to transfer electric power through the electromagnetic field in a non-contact manner, and can transfer large electric power of several kW over a relatively large distance (e.g., of several meters (see Patent Document 1 and Non Patent Document 1 for example).

PRIOR ART DOCUMENTS

PATENT DOCUMENTS

Patent Document 1: WO2007/008646

NON PATENT DOCUMENTS

Non Patent Document 1: Andre Kurs et al., "Wireless Power Transfer via Strongly Coupled Magnetic Resonances", [online], July 6, 2007, Science, volume 317, pp. 83-86, [searched on September 12, 2007], Internet <URL:http: //www.sciencemag.org/cgi/reprint/317/5834/83.pdf>

SUMMARY OF THE INVENTION

PROBLEMS TO BE SOLVED BY THE INVENTION

When electric power is transferred, an electromagnetic field is generated with a strength, which affects the surroundings. Accordingly, an upper limit is set therefor by an EMC related standard. When resonance is utilized to feed electric power in a non-contact manner for example to feed electric power to an electric motored vehicle requiring large electric power to be fed thereto, feeding electric power using a single frequency (e.g., a resonant frequency) causes at the frequency a large peak in electromagnetic field strength and may fail to satisfy the standard. Feeding reduced electric power to satisfy the standard, however, invites feeding electric power over a long period of time and impairs the user's convenience. While reducing a peak in electromagnetic field strength without feeding significantly reduced electric power is desired, such is not particularly discussed in the above documents.

The present invention contemplates non-contact electric power feeding equipment and a non-contact electric power feeding system that can reduce a peak in electromagnetic field strength without feeding significantly reduced electric power.

MEANS FOR SOLVING THE PROBLEMS

The present invention provides non-contact electric power feeding equipment including an electric power transferring resonator, a power supply device, and a control device. The electric power transferring resonator transfers electric power to an electric power receiving device in a non-contact manner by resonating with an electric power receiving resonator of the electric power receiving device through an electromagnetic field. The power supply device is connected to the electric power transferring resonator for supplying the electric power transferring resonator with predetermined high frequency electric power. The control device sets a frequency range for a spread spectrum, as based on an S-parameter S21 of a circuit constituted of the electric power transferring resonator and the electric power receiving resonator, and controls the power supply device to supply the electric power transferring resonator with high frequency electric power having the frequency range.

Preferably, the control device sets the frequency range for the spread spectrum, as based on a frequency band allowing the S-parameter S21 to have a relatively increased amplitude characteristic.

Preferably, the control device alternately switches two resonant frequencies that appear in an amplitude characteristic of the S-parameter S21 to provide the spread spectrum.

Furthermore, preferably, the control device sets the frequency range for the spread spectrum to be a frequency band including at least one of two resonant frequencies that appear in an amplitude characteristic of the S-parameter S21.

Furthermore, preferably, the control device sets the frequency range for the spread spectrum to be a frequency band between two resonant frequencies that appear in an amplitude characteristic of the S-parameter S21 excluding the two resonant frequencies.

Furthermore, preferably, the control device sets the frequency range for the spread spectrum, as based on a Q factor calculated as based on a resonant frequency that appears in an amplitude characteristic of the S-parameter S21.

Preferably, the electric power transferring resonator includes a primary coil and a primary self resonant coil. The primary coil is connected to the power supply device. The primary self resonant coil is fed with electric power from the primary coil through electromagnetic induction and generates the electromagnetic field.

Furthermore, the present invention provides a non-contact electric power feeding system including: electric power feeding equipment capable of outputting predetermined high frequency electric power; and an electric power receiving device capable of receiving electric power from the electric power feeding equipment in a non-contact manner. The electric power receiving device includes an electric power receiving resonator for receiving electric power from the electric power feeding equipment in a non-contact manner through an electromagnetic field generated between the electric power feeding equipment and the electric power receiving device. The electric power feeding equipment includes an electric power transferring resonator, a power supply device, and a control device. The electric power transferring resonator transfers electric power to the electric power receiving resonator in a non-contact manner by resonating with the electric power receiving resonator through the electromagnetic field. The power supply device is connected to the electric power transferring resonator for supplying the electric power transferring resonator with predetermined high frequency electric power. The control device sets a frequency range for a spread spectrum, as based on an S-parameter S21 of a circuit constituted of the electric power transferring resonator and the electric power receiving resonator, and controls the power supply device to supply the electric power transferring resonator with high frequency electric power having the frequency range.

Preferably, the electric power transferring resonator includes a primary coil and a primary self resonant coil. The primary coil is connected to the power supply device. The primary self resonant coil is fed with electric power from the primary coil through electromagnetic induction and generates the electromagnetic field. The electric power receiving resonator includes a secondary self resonant coil and a secondary coil. The secondary self resonant coil receives electric power from the primary self resonant coil by resonating with the primary self resonant coil through the electromagnetic field. The secondary coil extracts through electromagnetic induction the electric power received by the secondary self resonant coil.

EFFECTS OF THE INVENTION

Thus in the present invention a spread spectrum can be provided to have a frequency range set as based on an S-parameter S21 of a circuit constituted of an electric power transferring resonator and an electric power receiving resonator, and the spread spectrum with that frequency range can be used to transfer electric power. Thus a frequency band with high (electric power) transfer efficiency can be used and a peak in electromagnetic field spectrum for a particular frequency can also be reduced. Thus in the present invention a peak in electromagnetic field strength can be reduced without feeding significantly reduced electric power.

BRIEF DESCRIPTION OF THE DRAWINGS

Fig. 1 generally shows in configuration a non-contact electric power feeding system according to an embodiment of the present invention.
Fig. 2 is an equivalent circuit diagram of a portion involved in transferring power through resonance.
Fig. 3 represents electromagnetic field strength observed when electric power feeding equipment feeds electric power to an electric power receiving device.
Fig. 4 represents an amplitude characteristic of an S-parameter S21 of a circuit shown in Fig. 2.
Fig. 5 is a functional block diagram of a control device shown in Fig. 1.
Fig. 6 shows in configuration a hybrid vehicle indicated as one example of an electric motored vehicle having mounted therein an electric power receiving device shown in Fig. 1.
Fig. 7 is a diagram for illustrating a Q factor.
Fig. 8 shows a phase difference between a current passing through a primary self resonant coil and that passing through a secondary self resonant coil.

MODES FOR CARRYING OUT THE INVENTION

Hereinafter reference will be made to the drawings to describe the present invention in embodiments. In the figures, identical or corresponding components are identically denoted and will not be described repeatedly in detail.

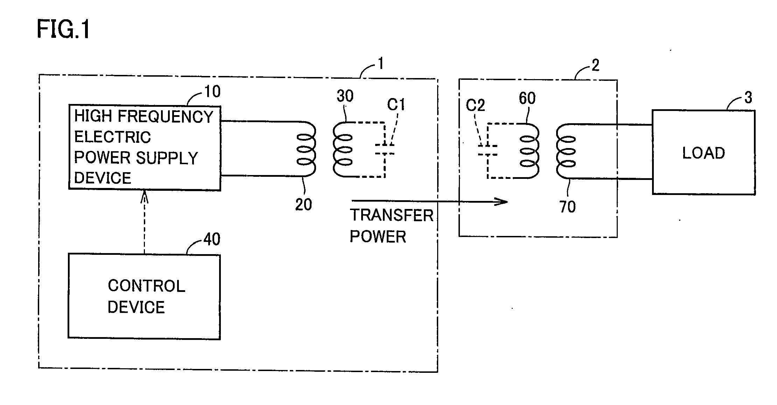

Fig. 1 generally shows in configuration a non-contact electric power feeding system according to an embodiment of the present invention. With reference to Fig. 1, the non-contact electric power feeding system includes electric power feeding equipment 1 and an electric power receiving device 2. Electric power feeding equipment 1 includes a high frequency electric power supply device 10, a primary coil 20, a primary self resonant coil 30, and a control device 40.

High frequency electric power supply device 10 is connected to primary coil 20 and operative in response to a drive signal received from control device 40 to generate a predetermined a high frequency voltage (for example of approximately several MHz to less than 20 MHz). High frequency electric power supply device 10 is constituted for example of a sine wave inverter circuit and controlled by control device 40.

Primary coil 20 is provided generally coaxially with primary self resonant coil 30 and configured to be capable of being magnetically coupled with primary self resonant coil 30 through electromagnetic induction, and receives high frequency electric power from high frequency electric power supply device 10 and feeds it to primary self resonant coil 30 through electromagnetic induction.

Primary self resonant coil 30 is an LC resonant coil having opposite ends open (or unconnected) and resonates with a secondary self resonant coil 60, which will be described hereinafter, of electric power receiving device 2 through an electromagnetic field to transfer electric power to electric power receiving device 2 in a non-contact manner. Note that while C1 denotes the stray capacitance of primary self resonant coil 30, an actual capacitor may alternatively be provided.

Control device 40 generates a drive signal for controlling high frequency electric power supply device 10 and outputs the generated drive signal to high frequency electric power supply device 10 to control high frequency electric power supply device 10 to control electric power fed from primary self resonant coil 30 to the electric power receiving device 2 secondary self resonant coil 60.

Note that control device 40 sets a frequency range for a spread spectrum, as based on an S-parameter S21 of a circuit that is constituted of primary coil 20, primary self resonant coil 30, and the electric power receiving device 2 secondary self resonant coil 60 and a secondary coil 70, which will be described hereinafter, and implements power transfer through resonance, and control device 40 controls high frequency electric power supply device 10 to output high frequency electric power having that frequency range.

More specifically, as has been described previously, when a single frequency is used to feed electric power, then, at that frequency, a large peak is caused in electromagnetic field strength, and a predetermined standard may not be satisfied. Accordingly in the present embodiment a peak in electromagnetic field strength caused in feeding electric power is reduced by employing spread spectrum techniques to transfer electric power spread over a predetermined frequency range.

To reduce a peak in electromagnetic field strength without feeding significantly reduced electric power, the present embodiment provides a spread spectrum having a frequency range set as based on a frequency band allowing a circuit implementing power transfer through resonance to provide an S-parameter S21 having a relatively increased amplitude characteristic. More specifically, the S-parameter S21 indicates a transfer factor from an input port of the circuit constituted of primary coil 20, primary self resonant coil 30, and the electric power receiving device 2 secondary self resonant coil 60 and secondary coil 70 (i.e., an input of primary coil 20) to an output port of the circuit (i.e., an output of secondary coil 70). Accordingly, a spread spectrum having a frequency range set as based on a frequency band allowing the S-parameter S21 to have a relatively increased amplitude characteristic allows a peak in electromagnetic field strength to be reduced without feeding significantly reduced electric power.

What characteristic the S-parameter S21 in the circuit implementing power transfer through resonance has and how control device 40 is configured in function will be described later.

Electric power receiving device 2 includes secondary self resonant coil 60 and secondary coil 70. As well as primary self resonant coil 30, secondary self resonant coil 60 is also an LC resonant coil having opposite ends open (or unconnected) and resonates with primary self resonant coil 30 of electric power feeding equipment 1 through an electromagnetic field to receive electric power from electric power feeding equipment 1 in a non-contact manner. Note that while C2 denotes the stray capacitance of secondary self resonant coil 60, an actual capacitor may alternatively be provided.

Secondary coil 70 is provided generally coaxially with secondary self resonant coil 60 and configured to be capable of being magnetically coupled with secondary self resonant coil 60 through electromagnetic induction, and secondary coil 70 extracts the electric power that is received by secondary self resonant coil 60 through electromagnetic induction, and outputs the extracted electric power to a load 3.

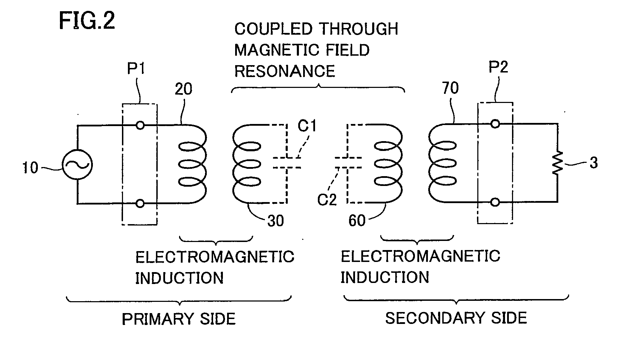

Fig. 2 is an equivalent circuit diagram of a portion involved in transferring electric power through resonance. With reference to Fig. 2, power transfer through resonance allows two LC resonant coils having the same natural frequency to resonate, as two tuning forks do, in an electromagnetic field (a near field) to transfer electric power from one coil to the other coil through the electromagnetic field.

More specifically, high frequency electric power supply device 10 is connected to primary coil 20 and feeds high frequency electric power of approximately several MHz to less than 20 MHz to primary self resonant coil 30 magnetically coupled with primary coil 20 through electromagnetic induction. Primary self resonant coil 30 is an LC resonator provided by the coil's own inductance and stray capacitance C1 and resonates with secondary self resonant coil 60 having the same resonant frequency as primary self resonant coil 30 through an electromagnetic field (a near field). This passes energy (electric power) from primary self resonant coil 30 to secondary self resonant coil 60 through the electromagnetic field. The energy (electric power) passed to secondary self resonant coil 60 is extracted by secondary coil 70 magnetically coupled with secondary self resonant coil 60 through electromagnetic induction and is supplied to load 3.

Note that the above S-parameter S21 corresponds to a ratio at which electric power input to a port P1 (i.e., electric power output from high frequency electric power supply device 10) reaches a port P2, i.e., a transfer factor from port P1 to port P2. Between ports P1 and P2 is formed the circuit constituted of primary coil 20, primary self resonant coil 30, secondary self resonant coil 60 and secondary coil 70.

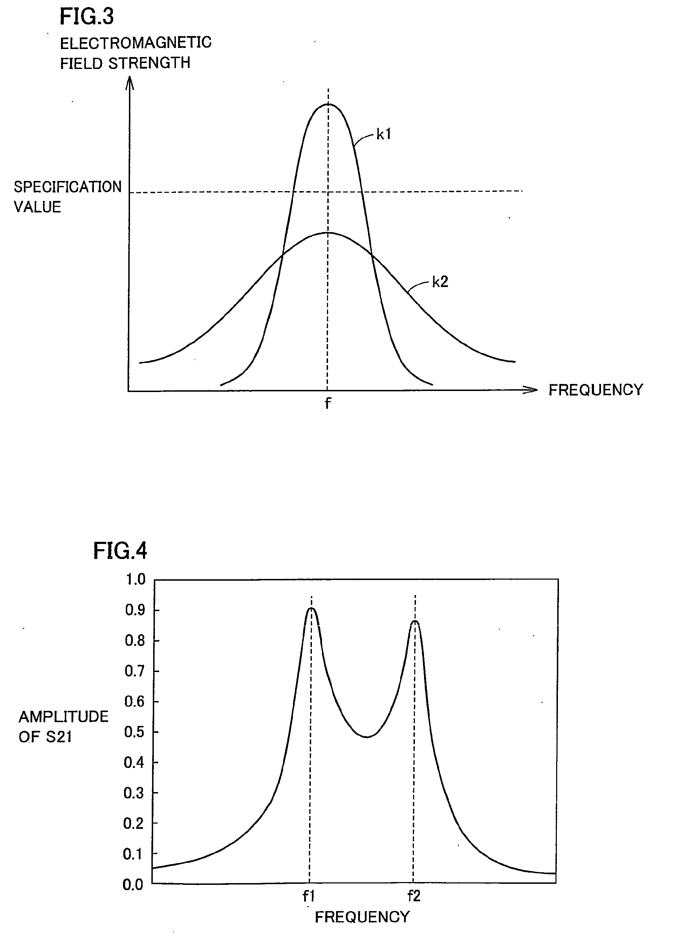

Fig. 3 represents electromagnetic field strength observed when electric power feeding equipment 1 feeds electric power to electric power receiving device 2. With reference to Fig. 3, the axis of ordinates represents electromagnetic field strength in feeding electric power and the axis of abscissas represents high frequency electric power supplied from electric power feeding equipment 1 to electric power receiving device 2 in frequency. A curve k1 represents an electromagnetic field strength provided when a single frequency f is used to feed electric power and a curve k2 represents an electromagnetic field strength provided when a spread spectrum is used to feed electric power.

As shown in Fig. 3, when the single frequency f is used to feed electric power, then, at frequency f, a large peak rises in electromagnetic field strength, and the generated electromagnetic field strength would exceed a specification value. In contrast, when the spread spectrum is used, the peak in electromagnetic field strength is reduced, and the generated electromagnetic field strength can be reduced to the specification value or smaller.

Fig. 4 represents an amplitude characteristic of an S-parameter S21 of a circuit shown in Fig. 2. With reference to Fig. 4, the axis of ordinates represents S-parameter S21 in amplitude and the axis of abscissas represents high frequency electric power supplied from high frequency electric power supply device 10 to the circuit in frequency.

As shown in Fig. 4, the Fig. 2 circuit implementing power transfer through resonance provides an S-parameter S21 having an amplitude characteristic with two peaks at frequencies f1 and f2 and thus **characterized in that** it has an amplitude relatively increased over a wide frequency band. In other words, the S-parameter S21 also increases at frequencies between frequencies f1 and f2. Accordingly in the present embodiment a spread spectrum is provided to have a frequency range set to include a frequency band allowing the S-parameter S21 to be increased in amplitude. Thus, a frequency band with high (electric power) transfer efficiency is used, while a spread spectrum reduces a peak in electromagnetic field strength.

Note that the spread spectrum's modulation system may be a direct sequence spread spectrum or a frequency hopping spread spectrum. The present embodiment adopts a frequency hopping spread spectrum employing resonant frequencies f1, f2 in the amplitude characteristic of the S-parameter S21.

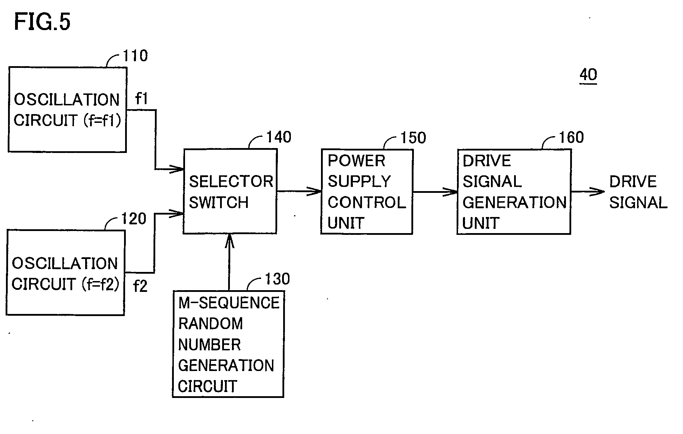

Fig. 5 is a functional block diagram of control device 40 shown in Fig. 1. With reference to Fig. 5, control device 40 includes oscillation circuits 110, 120, an M-sequence random number generation circuit 130, a selector switch 140, a power supply control unit 150, and a drive signal generation unit 160.

Oscillation circuit 110 generates a signal having resonance frequency f1 in the amplitude characteristic of the S-parameter S21 previously obtained. Oscillation circuit 120 generates a signal having resonance frequency f2 in the amplitude characteristic of the S-parameter S21. M-sequence random number generation circuit 130 generates a random number signal constituted of 0 and 1.

Selector switch 140 receives the signal of frequency f1 output from oscillation circuit 110 and the signal of frequency f2 output from oscillation circuit 120, and selector switch 140 operates in response to the random number signal received from M-sequence random number generation circuit 130 to select one of the signal of frequency f1 received from oscillation circuit 110 and the signal of frequency f2 received from oscillation circuit 120 and output the selected signal to power supply control unit 150.

Power supply control unit 150 generates a control instruction for causing high frequency electric power supply device 10 (see Fig. 1) to output high frequency electric power having the frequency of the signal received from selector switch 140, and outputs the generated control instruction to drive signal generation unit 160. Drive signal generation unit 160 operates in accordance with the control instruction received from power supply control unit 150 to generate a signal for driving high frequency electric power supply device 10, and outputs the generated signal to high frequency electric power supply device 10.

In control device 40 a signal having frequency f1 and a signal having frequency f2 are randomly switched by selector switch 140 and thus selectively provided to power supply control unit 150. Power supply control unit 150 controls high frequency electric power supply device 10 to output high frequency electric power having the frequency of the received signal. High frequency electric power supply device 10 thus outputs spectrum spread high frequency electric power randomly switched in frequency between frequencies f1 and f2 (or hopped in frequency).

Note that the above control can also be implemented with an S-parameter S21 calculated by using a technique employing a directional coupler such as a network analyzer. Furthermore, it can also be implemented with an S-parameter replaced with a Z-parameter, a Y-parameter or the like.

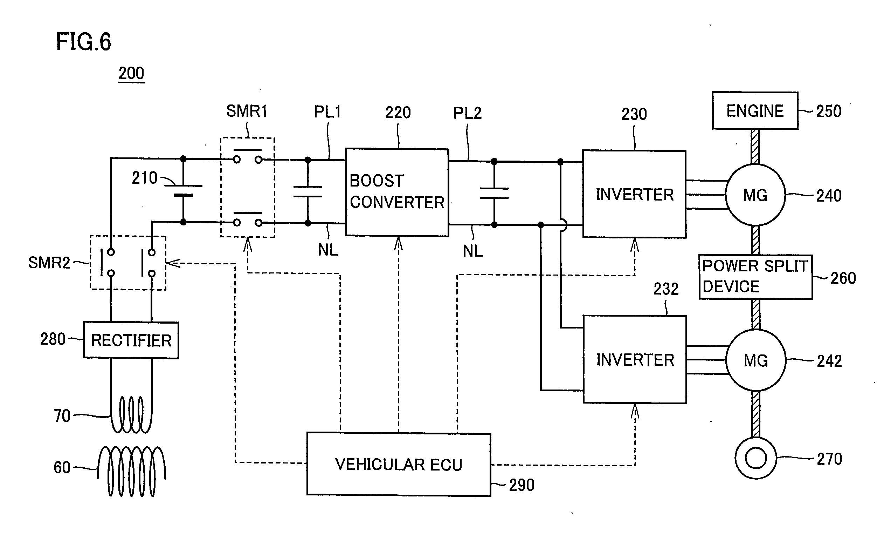

Fig. 6 shows in configuration a hybrid vehicle indicated as one example of an electric motored vehicle having mounted therein electric power receiving device 2 shown in Fig. 1. With reference to Fig. 6, a hybrid vehicle 200 includes a power storage device 210, a system main relay SMR1, a boost converter 220, inverters 230, 232, motor generators 240, 242, an engine 250, a power split device 260, and a drive wheel 270. Furthermore, hybrid vehicle 200 also includes secondary self resonant coil 60, secondary coil 70, a rectifier 280, a system main relay SMR2, and a vehicular ECU 290.

Hybrid vehicle 200 has engine 250 and motor generator 242 mounted therein as power sources. Engine 250 and motor generators 240, 242 are coupled with power split device 260. Hybrid vehicle 200 travels on driving force generated by at least one of engine 250 and motor generator 242. Power generated by engine 250 is split by power split device 260 to two paths: one is a path transmitting power to drive wheel 270 and the other is a path transmitting power to motor generator 240.

Motor generator 240 is an alternate current rotating electric machine and is for example a 3-phase alternate current synchronous electric motor having a rotor with a permanent magnet embedded therein. Motor generator 240 uses kinetic energy of engine 250 through power split device 260 to generate electric power. For example, when power storage device 210 has a state of charge (SOC) smaller than a predetermined value, engine 250 is started and motor generator 240 generates electric power to charge power storage device 210.

Motor generator 242 is also an alternate current rotating electric machine and is, as well as motor generator 240, for example a 3-phase alternate current synchronous electric motor having a rotor with a permanent magnet embedded therein. Motor generator 242 uses at least one of electric power stored in power storage device 210 and electric power generated by motor generator 240 to generate driving force which is in turn transmitted to drive wheel 270.

Furthermore, when the vehicle is braked or travels downhill and its acceleration is reduced or the like, mechanical energy stored in the vehicle as kinetic energy, potential energy and the like is used via drive wheel 270 to drive motor generator 242 to rotate motor generator 242 to allow motor generator 242 to operate as an electric power generator. Motor generator 242 thus operates as a regenerative brake converting traveling energy to electric power and generating braking force. The electric power generated by motor generator 242 is stored in power storage device 210.

Power split device 260 is constituted of a planetary gear including a sun gear, a pinion gear, a carrier, and a ring gear. The pinion gear engages with the sun gear and the ring gear. The carrier supports the pinion gear to be capable of revolving and is also coupled with a crankshaft of engine 250. The sun gear is coupled with a shaft of rotation of motor generator 240. The ring gear is coupled with a shaft of rotation of motor generator 242 and drive wheel 270.

System main relay SMR1 is provided between power storage device 210 and boost converter 220 and operates in response to a signal received from vehicular ECU 290 to electrically connect power storage device 210 to boost converter 220. Boost converter 220 boosts the voltage on a positive electrode line PL2 to a voltage equal to or larger than that output from power storage device 210. Note that boost converter 220 is constituted for example of a direct current chopper circuit. Inverters 230, 232 drive motor generators 240, 242, respectively. Note that inverter 230, 232 is constituted for example of a 3-phase bridge circuit.

Secondary self resonant coil 60 and secondary coil 70 are as has been described with reference to Fig. 1. Rectifier 280 rectifies alternate current electric power extracted by secondary coil 70. System main relay SMR2 is provided between rectifier 280 and power storage device 210 and operates in response to a signal received from vehicular ECU 290 to electrically connect rectifier 280 to power storage device 210.

Vehicular ECU 290 in a traveling mode turns on and off system main relays SMR1 and SMR2, respectively, and when the vehicle travels, vehicular ECU 290 operates in accordance with an accelerator pedal position, the vehicle's speed and other signals received from a variety of sensors to generate a signal for driving boost converter 220 and motor generators 240, 242 and output the generated signal to boost converter 220 and inverters 230, 232.

Furthermore, when electric power feeding equipment 1 (see Fig. 1) feeds electric power to hybrid vehicle 200, vehicular ECU 290 turns on system main relay SMR2. This allows electric power that is received by secondary self resonant coil 60 to be supplied to power storage device 210. Note that between rectifier 280 and power storage device 210 a DC/DC converter may be provided to receive direct current electric power rectified by rectifier 280 and convert it in voltage to the level in voltage of power storage device 210.

Note that system main relays SMR1 and SMR2 can also both be turned on to receive electric power from electric power feeding equipment 1 while the vehicle travels.

Thus in the present embodiment a spread spectrum can be provided to have a frequency range set as based on an S-parameter S21 of a circuit that is constituted of primary coil 20, primary self resonant coil 30, secondary self resonant coil 60 and secondary coil 70 and implements electric power transfer through resonance, and the spread spectrum with that frequency range can be used to transfer electric power. Thus a frequency band with high (electric power) transfer efficiency can be used and a peak in electromagnetic field spectrum for a particular frequency can also be reduced. Thus in the present embodiment a peak in electromagnetic field strength can be reduced without electric power feeding equipment 1 feeding significantly reduced electric power to electric power receiving device 2.

Note that while in the above embodiment the spread spectrum's modulation system is a frequency hopping spread spectrum, it may be a direct sequence spread spectrum. When the direct sequence spread spectrum is adopted, the spread spectrum may have a frequency range set at a frequency band including both resonant frequencies f1 and f2 shown in Fig. 4, a frequency band including one of frequencies f1 and f2, or a frequency band between frequencies f1 and f2.

When a frequency range including one of frequencies f1 and f2 is adopted and a direct sequence spread spectrum is employed to provide a spread spectrum, the frequency range may be determined as based on a Q factor.

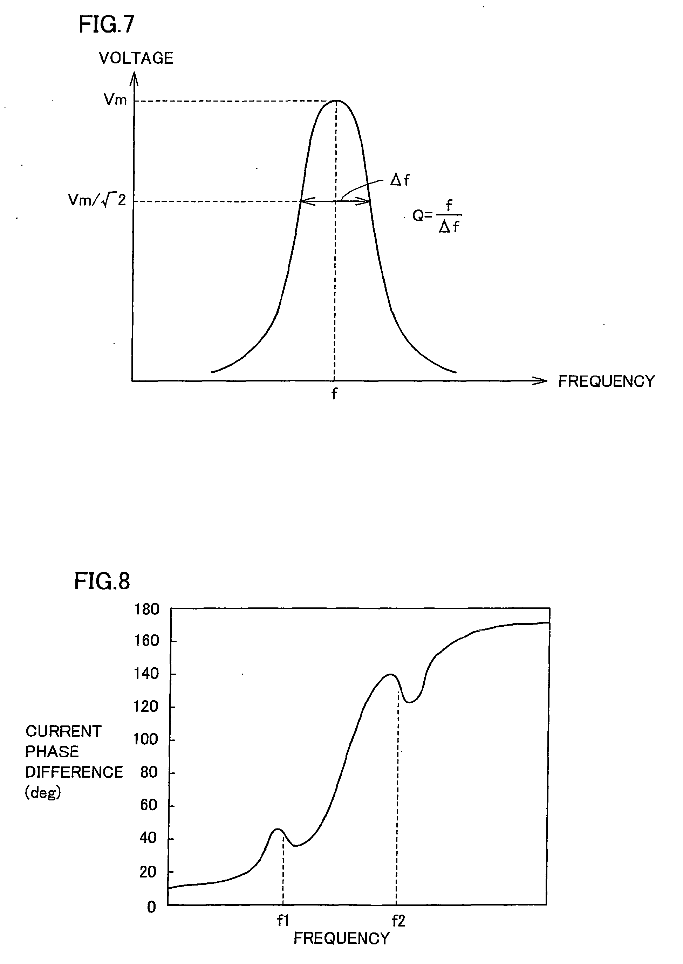

Fig. 7 is a diagram for illustrating a Q factor. With reference to Fig. 7, when electric power feeding equipment 1 transfers high frequency electric power of frequency f to electric power receiving device 2, the Q factor is expressed as follows:

$$Q \text{ factor} = f/\Delta f \qquad \qquad \dots(1)$$

where $\Delta f$ represents a width of a frequency band allowing a voltage of $V_m\sqrt{2}$ when voltage applied to load 3 (see Fig. 1) is represented as $V_m$. Accordingly, a spread spectrum is provided to have a frequency range set for example with Q1 representing a Q factor obtained from a peak for the Fig. 4 resonant frequency f1 in a frequency characteristic of a voltage applied to the load, as follows:

$$\Delta f1 = \alpha(f1/Q1) \qquad \qquad \dots(2)$$

where $\alpha$ represents an adjustment coefficient.

Alternatively, the spread spectrum may be provided to have a frequency range set with Q2 representing a Q factor obtained from a peak for the Fig. 4 another resonant frequency f2 in the frequency characteristic of the voltage applied to the load, as follows:

$$\Delta f2 = \beta(f2/Q2) \qquad \qquad \dots(3)$$

where $\beta$ represents an adjustment coefficient.

Note that $\alpha$ and $\beta$ are set below the specification's upper limit value.

Thus the spread spectrum can have a frequency range appropriately set as based on a Q factor.

Furthermore, varying in frequency the high frequency electric power supplied from electric power feeding equipment 1 to electric power receiving device 2 can change a distribution in strength of an electromagnetic field generated therearound when electric power feeding equipment 1 feeds electric power receiving device 2 with electric power.

Fig. 8 shows a phase difference between a current passing through primary self resonant coil 30 and that passing through secondary self resonant coil 60. With reference to Fig. 8, the axis of abscissas represents high frequency electric power supplied from electric power feeding equipment 1 to electric power receiving device 2 in frequency. As shown in Fig. 8, a current passing through primary self resonant coil 30 and that passing through secondary self resonant coil 60 have a phase difference varying with the fed electric power's frequency.

Note that an electromagnetic field caused around each coil has a distribution varying with a current passing through the coil, and when electric power feeding equipment 1 feeds electric power receiving device 2 with electric power, an electromagnetic field is generated with a strength having a distribution, which corresponds to an electromagnetic field generated around primary self resonant coil 30 by a current passing through primary self resonant coil 30 and an electromagnetic field generated around secondary self resonant coil 60 by a current passing through secondary self resonant coil 60 that are superposed on one another.

Accordingly, utilizing the fact that a current passing through primary self resonant coil 30 and that passing through secondary self resonant coil 60 have a phase difference varying with the fed electric power's frequency, as described above, to vary high frequency electric power supplied from electric power feeding equipment 1 to electric power receiving device 2 in frequency can change a distribution in strength of an electromagnetic field generated therearound when electric power feeding equipment 1 feeds electric power receiving device 2 with electric power, and feeding electric power having an appropriately selected frequency allows electromagnetic field strength to be reduced at a desired location.

In the above embodiment primary coil 20 is used to feed primary self resonant coil 30 with electric power through electromagnetic induction and secondary coil 70 is used to extract electric power from secondary self resonant coil 60 through electromagnetic induction. Alternatively, primary coil 20 may be dispensed with and high frequency electric power supply device 10 may directly feed primary self resonant coil 30 with electric power, and secondary coil 70 may be dispensed with and secondary self resonant coil 60 may have electric power extracted directly therefrom.

Furthermore in the above description a pair of self resonant coils is resonated to transfer electric power. Alternatively, resonators in the form of the pair of self resonant coils may be replaced with those in the form of a pair of high dielectric disks. Each disk is formed of a material of a high dielectric constant, such as $TiO_2$, $BaTi_4O_9$, $LiTaO_3$, or the like.

Furthermore, while in the above description an electric motored vehicle having electric power receiving device 2 mounted therein has been described by way of example as a series/parallel type hybrid vehicle employing power split device 260 to split and thus transmit power of engine 250 to drive wheel 270 and motor generator 240, the present invention is also applicable to different types of hybrid vehicles. More specifically, the present invention is applicable for example to: a so called series type hybrid vehicle that employs engine 250 only for driving motor generator 240 and generates force only by motor generator 242 for driving the vehicle; a hybrid vehicle recovering only regenerated energy of kinetic energy that is generated by engine 250 as electrical energy; and a motor-assisted hybrid vehicle having an engine as a major power source and a motor as an assistant as required. Furthermore, the present invention is also applicable to an electric vehicle excluding engine 250 and traveling only on electric power, and a fuel cell vehicle including a direct current power supply implemented as power storage device 210 and in addition thereto a fuel cell.

Note that in the above description primary self resonant coil 30 and primary coil 20 correspond in the present invention to an embodiment of an "electric power transferring resonator" and secondary self resonant coil 60 and secondary coil 70 correspond in the present invention to an embodiment of an "electric power receiving resonator". Furthermore, oscillation circuits 110, 120, M-sequence random number generation circuit 130 and selector switch 140 correspond in the present invention to an embodiment of a "frequency setting unit".

It should be understood that the embodiments disclosed herein are illustrative and non-restrictive in any respect. The scope of the present invention is defined by the terms of the claims, rather than the description above, and is intended to include any modifications within the scope and meaning equivalent to the terms of the claims.

DESCRIPTION OF THE REFERENCE SIGNS

1: electric power feeding equipment, 2: electric power receiving device, 3: load, 10: high frequency electric power supply device, 20: primary coil, 30: primary self resonant coil, 40: control device, 60: secondary self resonant coil, 70: secondary coil, 110, 120: oscillation circuit, 130: M-sequence random number generation circuit, 140: selector switch, 150: power supply control unit, 160: drive signal generation unit, 200: hybrid vehicle, 210: power storage device, 220: boost converter, 230, 232: inverter, 240, 242: motor generator, 250: engine, 260: power split device, 270: drive wheel, 280: rectifier, 290: vehicular ECU, C1, C2: stray capacitance, SMR1, SMR2: system main relay, PL1, PL2: positive electrode line; NL: negative electrode line.

**Claims**

1. Non-contact electric power feeding equipment comprising:

an electric power transferring resonator (30, 20) for transferring electric power to an electric power receiving device (2) in a non-contact manner by resonating with an electric power receiving resonator (60, 70) of said electric power receiving device through an electromagnetic field;
a power supply device (10) connected to said electric power transferring resonator for supplying said electric power transferring resonator with predetermined high frequency electric power; and
a control device (40) for setting a frequency range for a spread spectrum, as based on an S-parameter S21 of a circuit constituted of said electric power transferring resonator and said electric power receiving resonator, and for controlling said power supply device to supply said electric power transferring resonator with high frequency electric power having the frequency range.

2. The non-contact electric power feeding equipment according to claim 1,
wherein said control device sets the frequency range for the spread spectrum, as based on a frequency band allowing said S-parameter S21 to have a relatively increased amplitude characteristic.

3. The non-contact electric power feeding equipment according to claim 1,
wherein said control device alternately switches two resonant frequencies that appear in an amplitude characteristic of said S-parameter S21 to provide the spread spectrum.

4. The non-contact electric power feeding equipment according to claim 1,
wherein said control device sets the frequency range for the spread spectrum to be a frequency band including at least one of two resonant frequencies that appear in an amplitude characteristic of said S-parameter S21.

5. The non-contact electric power feeding equipment according to claim 1, wherein said control device sets the frequency range for the spread spectrum to be a frequency band between two resonant frequencies that appear in an amplitude characteristic of said S-parameter S21 excluding the two resonant frequencies.

6. The non-contact electric power feeding equipment according to claim 1, wherein said control device sets the frequency range for the spread spectrum, as based on a Q factor calculated as based on a resonant frequency that appears in an amplitude characteristic of said S-parameter S21.

7. The non-contact electric power feeding equipment according to any of claims 1-6, wherein said electric power transferring resonator includes:

a primary coil (20) connected to said power supply device; and
a primary self resonant coil (30) fed with electric power from said primary coil through electromagnetic induction for generating said electromagnetic field.

8. A non-contact electric power feeding system comprising:

electric power feeding equipment (1) capable of outputting predetermined high frequency electric power; and
an electric power receiving device (2) capable of receiving electric power from said electric power feeding equipment in a non-contact manner, wherein:

said electric power receiving device includes an electric power receiving resonator (60, 70) for receiving electric power from said electric power feeding equipment in a non-contact manner through an electromagnetic field generated between said electric power feeding equipment and said electric power receiving device; and

said electric power feeding equipment includes:

an electric power transferring resonator (20, 30) for transferring electric power to said electric power receiving resonator in a non-contact manner by resonating with said electric power receiving resonator through said electromagnetic field;

a power supply device (10) connected to said electric power transferring resonator for supplying said electric power transferring resonator with predetermined high frequency electric power; and

a control device (40) for setting a frequency range for a spread spectrum, as based on an S-parameter S21 of a circuit constituted of said electric power transferring resonator and said electric power receiving resonator, and for controlling said power supply device to supply said electric power transferring resonator with high frequency electric power having the frequency range.

9. The non-contact electric power feeding system according to claim 8, wherein:

said electric power transferring resonator includes
a primary coil (20) connected to said power supply device, and
a primary self resonant coil (30) fed with electric power from said primary coil through electromagnetic induction for generating said electromagnetic field; and
said electric power receiving resonator includes
a secondary self resonant coil (60) for receiving electric power from said primary self resonant coil by resonating with said primary self resonant coil through said electromagnetic field, and
a secondary coil (70) for extracting through electromagnetic induction the electric power received by said secondary self resonant coil.

FIG.1

Figure showing: LOAD (3), coil 70, coil 60 with C2, region 2; coil 30 with C1, coil 20, HIGH FREQUENCY ELECTRIC POWER SUPPLY DEVICE (10), CONTROL DEVICE (40), region 1; TRANSFER POWER.

# FIG.2

COUPLED THROUGH
MAGNETIC FIELD
RESONANCE

ELECTROMAGNETIC
INDUCTION

ELECTROMAGNETIC
INDUCTION

PRIMARY SIDE

SECONDARY SIDE

## FIG.3

ELECTROMAGNETIC
FIELD STRENGTH

SPECIFICATION
VALUE

k1

k2

FREQUENCY

f

## FIG.4

AMPLITUDE
OF S21

FREQUENCY

f1    f2

# FIG.5

```
┌─────────────┐ 110
│ OSCILLATION │ f1
│ CIRCUIT     │
│ (f=f1)      │
└─────────────┘
                      ┌──────────┐ 140      ┌──────────┐ 150      ┌──────────┐ 160
                      │ SELECTOR │          │ POWER    │          │ DRIVE    │      DRIVE
                      │ SWITCH   │  ──────▶ │ SUPPLY   │ ──────▶  │ SIGNAL   │ ───▶ SIGNAL
                      │          │          │ CONTROL  │          │GENERATION│
┌─────────────┐ 120   └──────────┘          │ UNIT     │          │ UNIT     │
│ OSCILLATION │            ▲                 └──────────┘          └──────────┘
│ CIRCUIT     │ f2         │
│ (f=f2)      │       ┌──────────┐ 130
└─────────────┘       │ M-SEQUENCE│
                      │ RANDOM    │
                      │ NUMBER    │
                      │ GENERATION│
                      │ CIRCUIT   │
                      └──────────┘
```

40

# FIG.6

200

SMR1 PL1 220 PL2 230 ENGINE — 250

210 — BOOST CONVERTER INVERTER MG — 240

SMR2 NL NL POWER SPLIT DEVICE — 260

232

280 — RECTIFIER INVERTER MG — 242

70 270

60

VEHICULAR ECU

290

FIG.7

FIG.8

| **INTERNATIONAL SEARCH REPORT** | International application No. |
|---|---|
| | PCT/JP2009/057733 |

| A. CLASSIFICATION OF SUBJECT MATTER |
|---|
| *H02J17/00*(2006.01)i |
| According to International Patent Classification (IPC) or to both national classification and IPC |

| B. FIELDS SEARCHED |
|---|
| Minimum documentation searched (classification system followed by classification symbols)<br>H02J17/00 |
| Documentation searched other than minimum documentation to the extent that such documents are included in the fields searched<br>  Jitsuyo Shinan Koho      1922-1996   Jitsuyo Shinan Toroku Koho   1996-2009<br>  Kokai Jitsuyo Shinan Koho   1971-2009   Toroku Jitsuyo Shinan Koho   1994-2009 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | WO 2007/008646 A2  (MASSACHUSETTS INSTITUTE OF TECHNOLOGY),<br>18 January, 2007 (18.01.07),<br>& CA 2615123 A        & CN 101258658 A<br>& EP 1902505 A        & JP 2009-501510 A<br>& KR 10-2008-0031398 A   & US 2007/0222542 A1<br>& US 2008/0278264 A1 | 1-9 |
| A | JP 2008-236917 A  (Seiko Epson Corp.),<br>02 October, 2008 (02.10.08),<br>(Family: none) | 1-9 |
| A | JP 2008-263710 A  (Olympus Corp.),<br>30 October, 2008 (30.10.08),<br>(Family: none) | 1-9 |

☐ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  23 July, 2009 (23.07.09) | Date of mailing of the international search report<br>  04 August, 2009 (04.08.09) |
|---|---|
| Name and mailing address of the ISA/<br>  Japanese Patent Office | Authorized officer |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007008646 A

**Non-patent literature cited in the description**

- **Andre Kurs et al.** Wireless Power Transfer via Strongly Coupled Magnetic Resonances. *Science,* 06 July 2007, vol. 317, 83-86, http://www.science-mag.org/cgi/reprint/317/5834/83.pdf